# EUROPÄISCHE PATENTSCHRIFT

(11) **EP 2 734 910 B1**
(45) Veröffentlichungstag und Bekanntmachung des Hinweises auf die Patenterteilung: **03.04.2019**
(21) Anmeldenummer: 12735510.5
(22) Anmeldetag: 11.07.2012
(51) Int. Cl.: G06F 3/041, G06F 3/01, H01F 7/02, H02K 35/00

(54) **BEDIENEINRICHTUNG**
OPERATOR CONTROL DEVICE
SYSTÈME DE COMMANDE

(30) Priorität: 18.07.2011 DE 102011079357
(43) Veröffentlichungstag der Anmeldung: 28.05.2014
(73) Patentinhaber: Continental Automotive GmbH, 30165 Hannover (DE)
(72) Erfinder: LANGE, Werner, 60439 Frankfurt (DE); ZOLLER, Ingo, 63768 Hösbach (DE)
(86) Internationale Anmeldenummer: PCT/EP2012/063541
(87) Internationale Veröffentlichungsnummer: WO 2013/010866

(56) Entgegenhaltungen:
- EP-A1- 0 901 141
- US-A1- 2003 030 533
- US-A1- 2006 256 075

## Beschreibung

Die Veröffentlichung bezieht sich auf eine Bedieneinrichtung mit einem Bedienelement mit haptischer Rückmeldung, wobei das ein oder mehrere Sensoren aufweisende Bedienelement von einer Bedienperson mittels eines Eingabeorgans betätigbar ist, mit einem ersten und einem zweiten ferromagnetischen flächigen Bauteil, die mit ihren großen Flächen parallel zueinander ausgerichtet und relativ zueinander bewegbar sind, wobei das erste ferromagnetische flächige Bauteil das Bedienelement bildet oder seine Bewegung ganz oder teilweise auf das Bedienelement überträgt, mit wenigstens einer auf einer Leiterplatte angeordneten Flachspule, die mit ihrer Ebene parallel zu den ferromagnetischen flächigen Bauteilen zwischen den ferromagnetischen flächigen Bauteilen angeordnet ist und wobei durch Bestromung der Flachspule die ferromagnetischen flächigen Bauteile zueinander bewegbar sind.

Die vorangemeldete DE 10 2010 007 486 A beschreibt eine Bedieneinrichtung mit den Merkmalen des Oberbegriffs des Patentanspruchs 1.

Die D1 (US 2006/0256075 A1) beschreibt eine haptische Bedieneinrichtung mit ferromagnetischen flächigen Bauteilen, bei denen Spulen um das ferromagnetische flächige Bauteil gewickelt sind.

Die D2 (US 2003/0030533 A1) beschreibt gedruckte Schaltkreise, die gedruckte Induktivitäten und Kapazitäten aufweisen, die Verwendung in rechentechnischen Anwendungen wie beispielsweise Bandpass-Filtern, Konvertern oder Übertragern finden.

Die D3 (EP 0901141 A1) beschreibt ein Relais mit zwei benachbart zueinander angeordneten flächigen Bauteilen mit jeweils einem elektrischen Kontakt, auf denen eine Flachspule angeordnet ist, durch deren Bestromen ein drittes flächiges Bauteil, welches in etwa parallel zu den benachbarten flächigen Bauteilen angeordnet ist, angezogen wird und so die zweielektrischen Kontakte verbindet.

Haptische Rückmeldungen von Bedienelementen werden vor allem dann gefordert, wenn ein Bediener den von ihm ausgeführten Bedienvorgang nicht direkt wahrnehmen kann. Während bei Bedienvorrichtungen mit elektromechanischen Schaltern für einen Bediener das Öffnen oder Schließen der Schaltkontakte durch eine sich ändernde Haptik des Bedienelements wahrnehmbar ist, ist dies bei elektronischen Schaltern nicht notwendigerweise vorhanden. Deshalb sind im Stand der Technik Bedienelemente bekannt, die mittels für den Bediener wahrnehmbaren Bewegungen des Bedienelements eine haptische Rückmeldung über einen erfolgten Bedienvorgang geben. Die bekannten haptischen Bedienelemente beispielsweise für sogenannte Touchscreens erfordern einen großen Bauraum, einen aufwendigen Antrieb und besondere konstruktive Maßnahmen, wenn diese beispielsweise in einem Umfeld eingesetzt werden sollen, das von besonders großen Temperaturunterschieden geprägt ist, wie es beispielsweise in einem Kraftfahrzeug der Fall ist, welches sowohl in arktischer Kälte als auch in sommerlicher Hitze seine Funktionsfähigkeit erhalten muss.

Bei Bedieneinrichtungen der eingangs genannten Art ist die die Flachspule tragende Leiterplatte zwischen den ferromagnetischen Bauteilen angeordnet. Aufgrund der Toleranzen in der Leiterplattendicke sowie von der idealen Ebene der Leiterplatte abweichenden Durchbiegungen der Leiterplatte muss der Abstand zwischen den ferromagnetischen flächigen Bauteilen relativ groß bemessen werden.

Dies führt zu einer großen Gesamtbauhöhe der Bedieneinrichtung und zu einem geringeren magnetischen Fluss sowie geringerer Kräfte im System der Bedieneinrichtung.

Aufgabe der Erfindung ist es daher, eine Bedieneinrichtung der eingangs genannten Art zu schaffen, die eine geringe Gesamtbauhöhe aufweist.

Diese Aufgabe wird erfindungsgemäß durch eine Bedieneinrichtung mit den Merkmalen des Patentanspruchs 1 gelöst.

Durch diese Ausbildung muss die Leiterplatte nicht mehr eine solche Steifheit aufweisen, dass sie formstabil planar die Flachspule trägt, da sie nun ihre formstabile Eigenschaft von dem formstabilen ersten ferromagnetischen Flächenbauteil erhält. Eine weitere Reduzierung der Bauhöhe wird dadurch erreicht, dass die Leiterplatte in Schichttechnik, insbesondere in Dickschichttechnik auf dem zweiten ferromagnetischen flächigen Bauteil aufgetragen ist. Die Dicke der Leiterplatte muss nur noch eine sichere Isolation zum zweiten ferromagnetischen flächigen Bauteil gewährleisten und kann so minimalisiert sein.

Sowohl die durch das erste ferromagnetische flächige Bauteil bedingte Ebenheit der Leiterplatte, die Vermeidung von Welligkeiten der Leiterplatte sowie deren geringe Dicke ermöglichen es, den Abstand zwischen den beiden ferromagnetischen flächigen Bauteilen und damit auch die Gesamtbauhöhe der Bedieneinrichtung gering zu dimensionieren sowie bei gegebener zur Verfügung stehender Energie größere Stellkräfte zu erzeugen.

Durch das Bestromen der Spule wird ein Magnetfeld aufgebaut und die beiden ferromagnetischen flächigen Bauteile zueinander gezogen.

Diese Bewegung ist für das Eingabeorgan wie z. B. einen Finger einer Bedienperson direkt oder indirekt wahrnehmbar.

Besonders einfach und dauerhaft ist die Flachspule herstellbar, wenn sie aus auf der Leiterplatte angeordneten Leiterbahnen besteht. Dabei kann die Leiterplatte kupferkaschiert und derart geätzt sein, dass die Leiterbahnen in vorzugsweise spiralförmiger Spulenbahn übrig bleiben.

Anstelle des Ätzens der Leiterbahnen können diese beispielsweise auch durch ein Bedrucken der Leiterplatte mit einem Leiterbahnmaterial wie Silberpaste erzeugt werden.

Zur Konzentration des magnetischen Flusses weist vorzugsweise die Flachspule einen rechtwinklig zur Ebene der ferromagnetischen flächigen Bauteile sich erstreckenden ferromagnetischen Spulenkern auf.

Aufgrund des geringen Abstandes zwischen den beiden ferromagnetischen flächigen Bauteilen ist auch die Höhe des Polschuhes gering. Weiterhin kann aufgrund der geringen einzuhaltenden Toleranzen der Polschuh bis nahe an das erste ferromagnetische Bauteil heranreichen, wodurch der magnetische Fluss erhöht wird.

Ist dabei der Spulenkern einteilig mit einem der ferromagnetischen flächigen Bauteile ausgebildet, so reduziert sich die Anzahl der Bauteile und der Montageaufwand.

Zur planen Befestigung der Leiterplatte auf dem zweiten ferromagnetischen flächigen Bauteil kann beispielsweise die Leiterplatte mittels einer Klebeschicht auf dem zweiten ferromagnetischen flächigen Bauteil angeordnet sein.

Eine weitere Reduzierung der Bauhöhe wird dadurch erreicht, dass die Leiterplatte in Schichttechnik, insbesondere in Dickschichttechnik auf dem zweiten ferromagnetischen flächigen Bauteil aufgetragen ist.

Vorzugsweise ist das zweite ferromagnetische flächige Bauteil nichtbeweglich angeordnet, so dass bei einer Bestromung der Flachspule nur das erste ferromagnetische Bauteil in Richtung auf das zweite ferromagnetische flächige Bauteil bewegt wird. Zur Bewegung der ferromagnetischen flächigen Bauteile in ihre Ruheposition bei nichtbestromter Flachspule können das erste ferromagnetische flächige Bauteil und das zweite ferromagnetische flächige Bauteil bei unbestromter Flachspule von einem Federelement bis zu einem bestimmten Maximalabstand voneinander weg bewegbar sein, wobei in einfacher Ausbildung der Maximalabstand der beiden ferromagnetischen flächigen Bauteile durch Anschläge bestimmt ist.

Das Bedienelement kann als Anzeige ausgebildet sein. Diese Anzeige kann im einfachsten Fall beispielsweise aus einer Bedruckung mit verschiedenen Ziffern in Form einer Telefontastatur ausgestaltet sein. So können beispielsweise verschiedene Ziffern ausgewählt werden, wenn mit dem Bedienorgan das Bedienelement an der entsprechenden Ziffer berührt wird und die Anzeige eine entsprechende Vorrichtung aufweist, mit der die Position des Eingabeorgans auf der Anzeige bestimmbar ist.

Die Anzeige kann dabei als elektrooptische Anzeige ausgebildet sein, bei der z. B. verschiedene Menüs, Untermenüs oder Einzelwerte auf der Anzeige dargestellt werden können, die dann durch eine entsprechende Berührung der Anzeige an der entsprechenden Position der Darstellung des auszuwählenden Menüs, Untermenüs oder Wertes detektiert werden. Derartige optoelektronische Anzeigen können beispielsweise als Leuchtdiodenmatrix, organisches Leuchtdiodendisplay oder Flüssigkristalldisplay ausgebildet sein und sind bereits als sogenannte Touchscreens bekannt.

Die Flachspulen werden zum Bewegen der flächigen ferromagnetischen Bauteile zueinander mit einem Gleichstrom oder einem niederfrequenten Wechselstrom bestromt. Zusätzlich kann dieser Strom mit einer Frequenz im Hörbereich, wie beispielsweise 1 Kilohertz moduliert werden, so dass diese Frequenz zusätzlich hörbar ist. So kann ein Klick hörbar sein, der sich anhört, als sei ein elektromagnetischer Schalter geöffnet oder geschlossen worden.

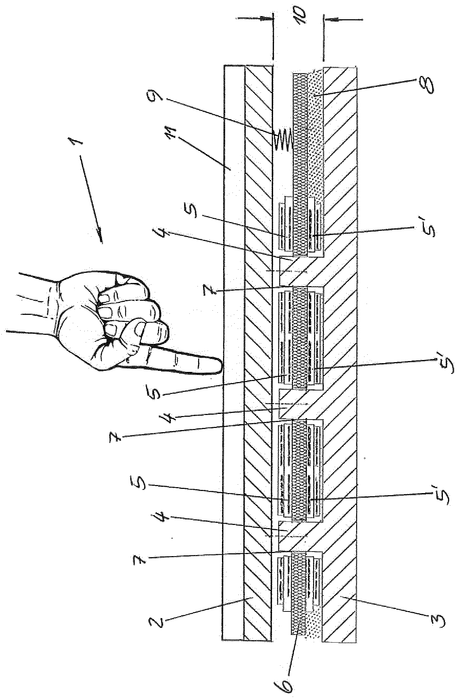

Ein alternatives Ausführungsbeispiel ist in der Zeichnung dargestellt und wird im Folgenden näher beschrieben. Die einzige Figur der Zeichnung zeigt eine Bedieneinrichtung im Querschnitt.

Die in der Figur dargestellte Bedieneinrichtung weist ein einer Bedienperson 1 zugewandtes erstes ferromagnetisches flächiges Bauteil 2 auf, das bedienerseitig eine optoelektronische Anzeige 11 wie z. B. ein LCD trägt und das quer zu seiner Flächenerstreckung beweglich ist.

Parallel dazu ist ein zweites ferromagnetisches flächiges Bauteil 3 nichtbeweglich angeordnet.

Das zweite ferromagnetische flächige Bauteil 3 weist in Abständen zueinander Spulenkerne 4 auf, die zu dem ersten ferromagnetischen flächigen Bauteil 2 gerichtet und mit dem zweiten ferromagnetischen flächigen Bauteil 3 einteilig ausgebildet sind.

Die Spulenkerne 4 sind jeweils von einem Paar spiralartiger Flachspulen 5, 5' umschlossen.

Die Flachspulen 5, 5' sind beispielsweise auf einer sich über die Fläche der ferromagnetischen flächigen Bauteile 2, 3 erstreckenden, als Keramiksubstrat ausgebildeten Leiterplatte 6 aufgedruckt, wobei die Flachspulen 5 auf der dem ersten ferromagnetischen flächigen Bauteil 2 und die Flachspulen 5' auf der dem zweiten ferromagnetischen flächigen Bauteil 3 zugewandten Seite auf die Leiterplatte 6 aufgedruckt sind.

Die Spulenkerne 4 ragen durch entsprechend in der Leiterplatte 6 ausgebildete Ausnehmungen 7.

Mittels einer Klebeschicht 8 ist beispielsweise die die Flachspulen 5, 5' tragende Leiterplatte 6 auf der dem ersten ferromagnetischen flächigen Bauteil 2 zugewandte Fläche des zweiten ferromagnetischen flächigen Bauteils 3 aufgeklebt.

Durch ein zwischen dem ersten ferromagnetischen flächigen Bauteil 2 und der Leiterplatte 6 angeordneten Federelement 9 ist das erste ferromagnetische flächige Bauteil 2 bei nicht bestromten Flachspulen 5, 5' auf den dargestellten Maximalabstand 10 zum zweiten ferromagnetischen flächigen Bauteil 3 gehalten.

Es versteht sich, dass über die Fläche von erstem ferromagnetischen flächigen Bauteil 2 und Leiterplatte 6 verteilt weitere nicht dargestellte Federelemente 9 angeordnet sind, so dass eine Bewegung des ersten ferromagnetischen flächigen Bauteils 2 immer parallel zum zweiten ferromagnetischen Flächenbauteil 3 erfolgt.

Wenn von einer nicht dargestellten Sensorik erkannt wird, dass ein Finger der Bedienperson 1 die elektrooptische Anzeige 11 berührt, werden die Flachspulen 5, 5' bestromt.

Werden die Flachspulen 5, 5' von dem Strom durchflossen, wird ein magnetischer Fluss in die ferromagnetischen flächigen Bauteile 2, 3 eingeprägt und so ein magnetischer Kreis geschlossen, so dass die beiden ferromagnetischen flächigen Bauteile 2, 3 entgegen der Kraft der Federelemente 9 relativ zueinander gezogen werden, ohne sich zu berühren.

Das erste ferromagnetische flächige Bauteil 2 bildet zusammen mit der elektrooptischen Anzeige gleichzeitig ein Bedienelement, so dass die Bedienperson die Bewegung des ersten ferromagnetischen flächigen Bauteils 2 über die elektrooptische Anzeige 11 haptisch erfasst.

## Patentansprüche

1. Bedieneinrichtung mit einem Bedienelement mit haptischer Rückmeldung, wobei das ein oder mehrere Sensoren aufweisende Bedienelement von einer Bedienperson mittels eines Eingabeorgans betätigbar ist, mit einem ersten und einem zweiten ferromagnetischen flächigen Bauteil, die mit ihren großen Flächen parallel zueinander ausgerichtet und relativ zueinander bewegbar sind, wobei das erste ferromagnetische flächige Bauteil das Bedienelement bildet oder seine Bewegung ganz oder teilweise auf das Bedienelement überträgt, mit wenigstens einer auf einer Leiterplatte angeordneten Flachspule, die mit ihrer Ebene parallel zu den ferromagnetischen flächigen Bauteilen zwischen den ferromagnetischen flächigen Bauteilen angeordnet ist und wobei durch Bestromung der Flachspule die ferromagnetischen flächigen Bauteile zueinander bewegbar sind, wobei die die Flachspule (5, 5') tragende Leiterplatte (6) fest auf der dem ersten ferromagnetischen flächigen Bauteil (2) zugewandten Fläche des zweiten ferromagnetischen flächigen Bauteils (3) angeordnet ist, und wobei die Leiterplatte in Schichttechnik auf dem zweiten ferromagnetischen flächigen Bauteil aufgetragen ist.

2. Bedieneinrichtung nach Anspruch 1, wobei die Flachspule (5, 5') einen rechtwinklig zur Ebene der ferromagnetischen flächigen Bauteile (2, 3) sich erstreckenden ferromagnetischen Spulenkern (4) aufweist.

3. Bedieneinrichtung nach Anspruch 2, wobei der Spulenkern (4) einteilig mit einem der ferromagnetischen flächigen Bauteile (3) ausgebildet ist.

4. Bedieneinrichtung nach einem der vorhergehenden Ansprüche, wobei das zweite ferromagnetische flächige Bauteil (3) nichtbeweglich angeordnet ist.

5. Bedieneinrichtung nach einem der vorhergehenden Ansprüche, wobei das erste ferromagnetische flächige Bauteil (2) und das zweite ferromagnetische flächige Bauteil (3) bei unbestromter Flachspule (5, 5') von einem Federelement (9) bis zu einem bestimmten Maximalabstand (10) voneinander weg bewegbar sind.

6. Bedieneinrichtung nach Anspruch 5, wobei der Maximalabstand (10) der beiden ferromagnetischen flächigen Bauteile (2, 3) durch Anschläge bestimmt ist.

7. Bedieneinrichtung nach einem der vorhergehenden Ansprüche, wobei das Bedienelement als Anzeige ausgebildet ist.

8. Bedieneinrichtung nach Anspruch 7, wobei die Anzeige eine elektrooptische Anzeige (11) ist.

## Claims

1. Operator control device having an operator control element with haptic feedback, wherein the operator control element which has one or more sensors can be activated by an operator by means of an inputting limb, by having a first and a second ferromagnetic two-dimensional component, which components are oriented with their large faces parallel to one another and can be moved relative to one another, wherein the first ferromagnetic two-dimensional component forms the operator control element or transmits its movement entirely or partially to the operator control element, having at least one flat coil which is arranged on a printed circuit board and is arranged between the ferromagnetic two-dimensional components with its plane parallel to the ferromagnetic two-dimensional components, and wherein the ferromagnetic two-dimensional components can be moved with respect to one another by energizing the flat coil, wherein the printed circuit board (6) which bears the flat coil (5, 5') is permanently arranged on the face of the second ferromagnetic two-dimensional component (3) facing the first ferromagnetic two-dimensional component (2), and wherein the printed circuit board is applied to the second ferromagnetic two-dimensional component using film technology.

2. Operator control device according to Claim 1, wherein the flat coil (5, 5') has a ferromagnetic coil former (4) which extends at a right angle to the plane of the ferromagnetic two-dimensional components (2, 3).

3. Operator control device according to Claim 2, wherein the coil former (4) is embodied in one piece with one of the ferromagnetic two-dimensional components (3).

4. Operator control device according to one of the preceding claims, wherein the second ferromagnetic two-dimensional component (3) is arranged in a non-movable fashion.

5. Operator control device according to one of the preceding claims, wherein the first ferromagnetic two-dimensional component (2) and the second ferromagnetic two-dimensional component (3) can be moved away from one another by a spring element (9) when the flat coil (5, 5') is not energized up to a specific maximum spacing (10).

6. Operator control device according to Claim 5, wherein the maximum spacing (10) of the two ferromagnetic two-dimensional components (2, 3) is determined by stops.

7. Operator control device according to one of the preceding claims, wherein the operator control element is embodied as a display.

8. Operator control device according to Claim 7, wherein the display is an electro-optical display (11).

## Revendications

1. Système de commande comportant un élément de commande pourvu d'un retour haptique, dans lequel l'élément de commande, qui comporte un ou plusieurs capteurs, peut être actionné par un opérateur au moyen d'un organe d'entrée, comportant des première et deuxième pièces structurales planes ferromagnétiques dont les faces de grande taille sont orientées parallèlement l'une à l'autre et qui peuvent être déplacées l'une par rapport à l'autre, dans lequel la première pièce structurale plane ferromagnétique forme l'élément de commande ou transmet son mouvement totalement ou partiellement sur l'élément de commande, comportant au moins une bobine plate qui est disposée sur une carte de circuit imprimé, et dont le plan est disposé parallèlement aux pièces structurales planes ferromagnétiques entre les pièces structurales planes ferromagnétiques, et dans lequel les pièces structurales planes ferromagnétiques peuvent être déplacées l'une par rapport à l'autre lorsqu'un courant circule dans la bobine plate, dans lequel la carte de circuit imprimé (6) portant la bobine plate (5, 5') est disposée de manière fixe sur la face de la deuxième pièce structurale plane ferromagnétique (3) qui est tournée vers la première pièce structurale plane ferromagnétique (2), et dans lequel la carte de circuit imprimé est mise en place par une technique de couches sur la deuxième pièce structurale plane ferromagnétique.

2. Système de commande selon la revendication 1, dans lequel la bobine plate (5, 5') comporte un noyau de bobine ferromagnétique (4) s'étendant perpendiculairement au plan des pièces structurales planes ferromagnétiques (2, 3).

3. Système de commande selon la revendication 2, dans lequel le noyau de bobine (4) est réalisé d'un seul tenant avec l'une des pièces structurales planes ferromagnétiques (3).

4. Système de commande selon l'une des revendications précédentes, dans lequel la deuxième pièce structurale plane ferromagnétique (3) est disposée de manière fixe.

5. Système de commande selon l'une des revendications précédentes, dans lequel la première pièce structurale plane ferromagnétique (2) et la deuxième pièce structurale plane ferromagnétique (3) peuvent être écartées l'une de l'autre par un élément élastique (9) jusqu'à une distance maximale déterminée (10) lorsqu'aucun courant ne circule dans la bobine plate (5, 5').

6. Système de commande selon la revendication 5, dans lequel la distance maximale (10) entre les deux pièces structurales planes ferromagnétiques (2, 3) est déterminée par des butées.

7. Système de commande selon l'une des revendications précédentes, dans lequel l'élément de commande est réalisé sous la forme d'un affichage.

8. Système de commande selon la revendication 7, dans lequel l'affichage est un affichage électro-optique (11).
